# EUROPEAN PATENT SPECIFICATION

(11) **EP 3 954 589 B1**
(45) Date of publication and mention of the grant of the patent: **17.04.2024**
(21) Application number: 21191195.3
(22) Date of filing: 13.08.2021
(51) Int. Cl.: B60T 7/20, B60T 13/26, B60T 13/38, B60T 13/66, B60T 13/68, B60T 17/22, B60T 8/32

(54) **A VEHICLE BRAKING SYSTEM**
FAHRZEUGBREMSSYSTEM
SYSTÈME DE FREIN DE VÉHICULE

(30) Priority: 14.08.2020 GB 202012733
(43) Date of publication of application: 16.02.2022
(73) Proprietor: Haldex Brake Products AB, 26124 Landskrona (SE)
(72) Inventor: ROBERTSON, Brian, Warwickshire, CV13 6DE (GB); HARRISON, Dudley, Warwickshire, CV13 6DE (GB)
(74) Representative: Müller Schupfner & Partner Patent- und Rechtsanwaltspartnerschaft mbB

(56) References cited:
- EP-B1- 2 750 949
- EP-B1- 3 150 450
- GB-A- 2 543 037

## Description

The present invention relates to a braking system, particularly, but not exclusively to a braking system for a trailer of a road vehicle comprising a tractor and trailer combination.

Large commercial trailers are typically fitted with two types of brake actuator - a service actuator in which air pressure on a piston or diaphragm pushes a rod which applies mechanical turning force to the input shaft of the brake, and a service/spring actuator which includes, in addition to a service actuator, a spring actuator comprising an internal coil spring which acts on the pushrod, which can be compressed when a second chamber is pressurised. The brakes can be applied therefore by either increasing pressure supplied to the service actuator as normal, and/or by a reducing the pressure supplied to the spring actuator.

A common configuration, for example, is a semi-trailer with three axles, the front of which has service actuators and the middle and rear of which has service/spring actuators. Other combinations are also possible.

In the normal driving condition the spring actuators are pressurised from the compressed air supply line (or trailer reservoir) to hold them off. Graduated braking in response to driving demand for braking is effected via the service actuators.

If the compressed air supply (or trailer reservoir) pressure falls, the pressure to the service actuators falls with it, reducing the applied force to the brake. At the same time, however, the pressure in the spring actuators is reducing by the same amount, which results in substantially the same braking force being maintained until and including when the supply line or reservoir is completely empty. Normally a park valve is also included in the supply line, which allows the pressure in the spring actuators to be exhausted in order to positively park the trailer.

A shunt valve is also included to divert air from the trailer reservoir to defeat the emergency apply function in order to allow the trailer to be moved ('shunted') without connection to a towing vehicle with a compressed air supply. This may be required, for instance, at a distribution depot or ferry terminal.

Emergency braking by the supply of pressurised fluid to the service actuators (i.e. via the service brake line) has an advantage in that this flow of fluid is normally controlled by the electronic braking system (EBS) or anti-lock braking system (ABS) of the trailer.

EP2750949 discloses a vehicle braking system comprising a brake actuator configured to apply a braking force to a vehicle wheel and further includes an override valve which, when supplied with sufficient electrical power, acts to prevent loss of pressure at a control port of an emergency brake apply valve. EP3150450 discloses a vehicle braking system comprising a supply line, a pressurised fluid reservoir, and an emergency brake apply valve which is movable between a first and second position such that when the supply line is pressurised, a pressure sensor is directly connected to the pressurised fluid reservoir. GB2543037 discloses a braking system including a supply line, a parking/service brake actuation assembly and an emergency apply valve which is movable between a first, a second, and a third position.

Aspects of the invention seek to ameliorate one or more problems associated with the prior art.

According to a first aspect of the invention there is provided a vehicle braking system for a vehicle including a tractor and a trailer having: a control unit, a spring brake actuator and a service brake actuator, a supply line and an auxiliary fluid reservoir, the spring brake actuator being held in a spring brake release position by the provision of pressurised fluid and in a spring brake apply position when pressurised fluid is vented to atmosphere and the service brake actuator being operable to move to a brake apply position by the provision of pressurised fluid, and characterised in that the control unit is operable to connect the auxiliary fluid reservoir to the spring brake actuator when pressure in the supply line falls below a supply threshold and to initiate an autonomous braking intervention in which the service brake actuator is in its brake apply position until the vehicle speed reaches a low speed threshold.

According to a second aspect of the invention there is provided a method of controlling a vehicle braking system of a vehicle including a tractor and a trailer, where the braking system includes a control unit, a spring brake actuator and a service brake actuator, a supply line and an auxiliary fluid reservoir; wherein the spring brake actuator is held in a spring brake release position by the supply of fluid and in a spring brake apply position when the supply of fluid is vented to atmosphere or lost and the service brake actuator being operable to move to a brake apply position by the supply of fluid, characterised in that the method includes: identifying that a pressure in the supply line has fallen below a supply threshold, connecting the auxiliary fluid reservoir to the spring brake actuator, and initiating an autonomous braking intervention using the control unit and applying service brake actuator until the vehicle reaches a low speed threshold.

Further optional features according to all aspects of the invention are recited by the appended claims.

Embodiments of the invention will now be described, by way of example only, with reference to the following figures, of which,
FIGURE 1 shows a schematic illustration of an embodiment of braking system according to the invention in normal service braking mode,
FIGURE 2 shows a schematic illustration of the braking system according to the invention in autonomous or forced braking mode,
FIGURE 3 shows a schematic illustration of the braking system according to the invention in normal parking mode,
FIGURE 4 shows a schematic illustration of the braking system according to the invention when the supply line is disconnected from the source of pressurised fluid,
FIGURE 5 shows a schematic illustration of the braking system according to the invention in emergency braking override mode, and
FIGURE 6 shows a flow diagram illustrating the operation of the control unit.

Referring to the figures, features of the infrastructure used for the braking system 10 is outlined.

There is shown a braking system 10 for a trailer of a vehicle comprising a tractor and a trailer or semi-trailer. The braking system 10 includes an electric control unit (ECU) 50 which provides electrical signals to parts of the braking system 10 to control braking interventions.

The braking system 10 includes a supply line 12, a control unit, a spring brake actuator and a service brake actuator, and an auxiliary fluid reservoir 28.

The supply line 12 is adapted to be connected to a source of pressurised fluid (for example, to a compressed air reservoir on a tractor to which the trailer is coupled).

The braking system 10 further includes an auxiliary fluid reservoir 28 (which may be located on the trailer). The auxiliary fluid reservoir 28 may be connected to the supply line 12, so that it is continually replenished / kept substantially full with fluid (e.g. air).

The braking system 10 also includes a brake actuator 23 including a spring brake actuator and a service brake actuator for applying braking force to a wheel. It should be appreciated that a trailer will have more than one wheel and each wheel may have its own brake actuator, which is connected into the braking system 10 in the same manner as described here. Thus, it is likely that the braking system 10 will have multiple brake actuators 23.

The spring brake actuator is held in a spring brake release position by the provision of pressurised fluid and in a spring brake apply position when pressurised fluid is vented to atmosphere. In other words, the spring brake actuator 23a is operable to adopt first and second positions. In the first position ("a spring brake apply position"), braking is applied to its associated wheel and, in the second position ("a spring brake release position") any braking to the wheel is released. The spring brake actuator is configured such that supply of pressurised fluid causes it to move to the spring brake release position and the release of pressurised fluid causes it to move to the spring brake apply position.

In some embodiments, the spring brake actuator functionality is provided by a spring brake chamber 23a which houses a spring. The spring is biased to position in which the braking force is applied to the wheel (thus, when there is no or inadequate supply of pressurised fluid, the spring brake actuator is in the brake apply position). When pressurised fluid is provided to the spring brake chamber 23b, it acts against the biasing of the spring and the brakes are released (the spring brake release position).

The service brake actuator is operable to move to a brake apply position by the provision of pressurised fluid. In other words, the service brake actuator is operable to move between a first and a second position. In the first position ("a brake apply position") braking is provided to its associated wheel and, in the second position ("a brake release position") braking is released from the wheel. The service brake actuator being configured such that supply of pressurised fluid causes movement to the brake apply position and release of pressurised fluid causes movement to the brake release position.

It should be appreciated that the differences between the spring brake actuator and the service brake actuator mean that the brakes can be controlled differently. In the case of the spring brake actuator, the difference in pressure between enough fluid to overcome the biasing of the spring and release the brakes and not enough fluid to overcome the spring is small (especially compared with the service brake actuator). The service brake actuator is relatively more controllable in different "brake apply" positions. In other words, the service brake actuator can be controlled to apply braking to its associated wheel in different positions between a "lightly" applied brake (i.e. a small amount of braking force) and a "heavily" applied brake (i.e. a large amount of braking force). Thus, for situations when it is undesirable for the wheels to lock (because maximum braking force has been applied) it is easier to use the service brake actuator for retardation of the vehicle.

In embodiments, the braking system 10 includes a control line 30. The control line 30 is adapted to be coupled to a braking control line on a tractor to which the trailer is coupled. The pressure in the control line 30 is controlled by the demand signals made on the tractor / towing vehicle. For example, when the driver of the tractor applies a foot on a foot brake pedal, the control line 30 is pressurised as is demanded by that application.

The braking system 10 further includes an emergency brake apply valve 20, an electrically operable emergency braking override valve 36 and an electrically operable brake apply valve 32.

The emergency brake apply valve 20 is connected to the supply line 12, and is operable to connect the spring brake actuator to a low pressure region automatically when the pressure to the emergency brake apply valve falls below a threshold (a supply threshold), In more detail, the output 20b of the emergency apply valve 20 is connected to the spring brake chamber 23a of spring brake actuator via a spring brake line 21. The emergency apply valve 20 is also provided with a control input 20c which is connected to the supply line 12 (in the illustrated example, the supply line 12 extends through the park valve first and the control port of the emergency apply valve 20 is connected to an output 22b of the park valve 22).

The electrically operable emergency braking override valve (EBOV) 36 is connected to the supply line 12, the auxiliary fluid reservoir 28 and the emergency brake apply valve 20. The EBOV 36 has a first position in which the supply line 12 is connected to the emergency brake apply valve 20 and a second position in which the auxiliary fluid reservoir 28 is connected to the emergency brake apply valve 20, In more detail, the EBOV 36 has a first port 36a which is connected to the supply line 12 (in the illustrated example, via the output 22b of the park valve 22), a second port 36b which is connected to the emergency apply valve 20 (i.e. the control port 20c of the emergency apply valve 20), and a third port 36c which is connected to a branch of the supply line ("the emergency apply line 16") and the auxiliary fluid reservoir 28.

In the illustrated embodiment, two one-way check valves 24a, 24b are provided in the emergency apply line 16, both being oriented to allow flow of fluid from the supply line 12 to the emergency apply valve 20 but to prevent flow of fluid in the other direction along the emergency apply line 16, i.e. away from the emergency apply valve 20. In some embodiments, the EBOV 36 is connected to the emergency apply line 16 between the first and second check valves 24a, 24b

The brake apply valve 32 is connected to the control line 30, the auxiliary fluid reservoir 28 and the service brake actuator (in the illustrated example, the brake apply valve 32 is connected to the service brake actuator via an electronic braking system (EBS) valve assembly 25. The brake apply valve 32 has a first position in which the control line 30 is connected to the service brake actuator and a second position in which the auxiliary fluid reservoir 28 is connected to the service brake actuator.

In more detail, a first input 32a of the brake apply valve 32 is connected to the control line 30, a second input 32c of the brake apply valve 32 is connected to the auxiliary fluid reservoir 28 (via the trailer supply line 26) and an output 32b of the brake apply valve 32 is connected to control input of the electrical braking system (EBS) valve assembly 25 via a service brake line 27.

The EBS valve assembly 25 includes at least one modulator and is connected to the service brake actuator. The modulator has a control port which is connected to the control line for receipt of a fluid pressure braking demand signal, a supply port which is connected to a source of pressurised fluid, a delivery port which is connected to the service brake chamber, and an exhaust port which vents to a low pressure region, and is operable to move between a build configuration in which the supply port is connected to the delivery port whilst the exhaust port is closed, a hold configuration in which the exhaust port and the supply ports are closed and an exhaust configuration in which the delivery port is connected to the exhaust port whilst the supply port is closed. Various configurations of modulator are well known to those skilled in the art. The EBS valve assembly 25 is operable to provide anti-lock braking control.

A trailer supply line 26 extends from the emergency apply line 16 between the two check valves 24a, 24b to the auxiliary fluid reservoir 28.

It should be appreciated that when a valve is described as being connected to the supply line 12, this does not means that there are no other components / valves connected between that valve and the supply. Ultimately, the spring brake actuator is connected to the supply line 12, but the valves (e.g. the emergency apply valve 20, EBOV 36, and other optional valves outlined below etc.) that the supply line 12 passes through on its way to the spring brake actuator control how the pressurised fluid is supplied to the spring brake actuator in various different conditions.

In some embodiments, the braking system 10 includes a shunt valve 14, which is (manually) operable to connect the braking system to the auxiliary reservoir 28. In such an embodiment the supply line 12 extends to connect to the shunt valve 14 (e.g. connects to a first input 14a of the shunt valve 14). An output 14b of the shunt valve 14 may be connected to a junction between an emergency apply line 16 and a park line 18. The emergency apply line 16 extends to an input 20a of the emergency apply valve 20. In some embodiments, an outlet from the auxiliary fluid reservoir 28 is connected to a second input 14c of the shunt valve 14.

In some embodiments, the braking system 10 includes a park valve 22, which is (manually) operable to disconnect the spring brake actuator from the supply of pressurised fluid. In this case, the park line 18 may extend to an input 22a of a park valve 22. In some embodiments, the park valve 22 is put in its applied position when the trailer is parked and disconnected, such that when the supply line 12 is connected to a new tractor on hooking-up for a new journey, the spring brake actuator will not automatically be released until the park valve 22 has been manually switched.

The positions of the various essential and optional valves of the braking system 10 are now discussed in more detail.

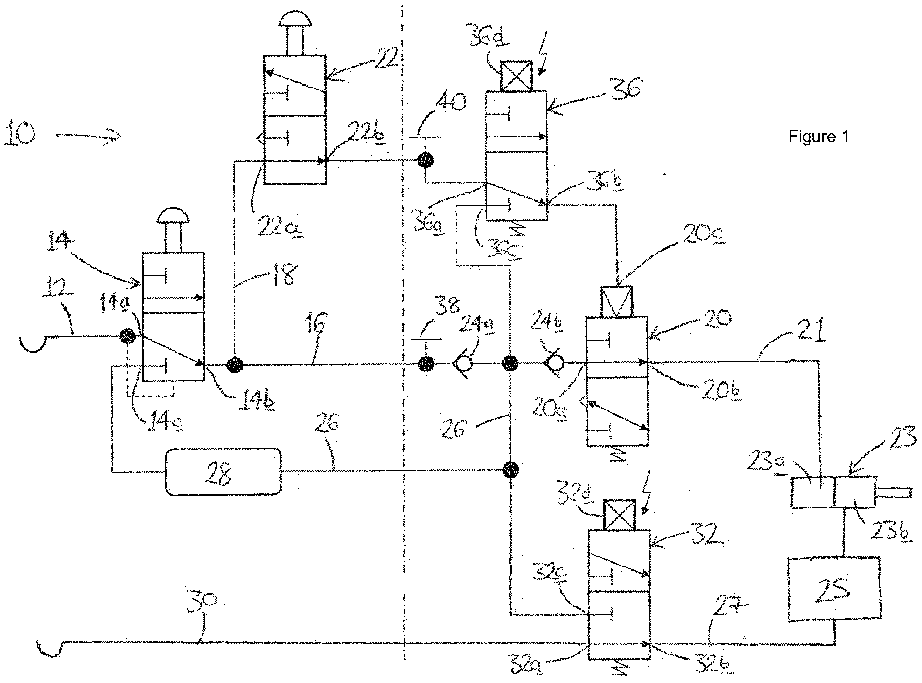

The emergency apply valve 20 is movable between a first position (illustrated in Figure 1) in which the first input 20a is connected to the output 20b and a second position in which the first input 20a is closed and the output 20b vents to a low pressure region (typically to atmosphere). Mechanical biasing means (in this example a spring) is provided to urge the emergency apply valve 20 into the second position. Movement of the emergency apply valve 20 from the second position to the first position is achieved by the supply of pressurised fluid to the control input 20c at sufficient pressure to overcome the force of the biasing means.

The brake apply valve 32 is movable between a first position (illustrated in Figure 1) in which the first input 32a is connected to the output 32b, whilst the second input 32c is closed, and a second position in which the first input 32a is closed and the third input 32c is connected to the output 32b. The brake apply valve 32 is electrically operable, in this example, by means of a solenoid. Mechanical biasing means (in this example a spring) is provided to urge the brake apply valve 32 into the first position. Movement of the brake apply valve 32 from the first position to the second position is achieved by the supply of an electrical current to the solenoid 32d.

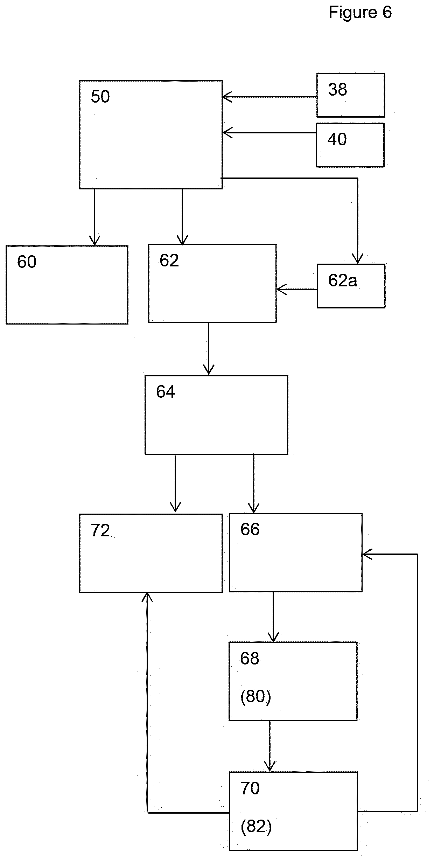

The emergency braking override valve 36 is movable between a first position (illustrated in Figures 1 to 5) in which its first port 36a is connected to its second port 36b, whilst its third port 36c is closed, and a second position (illustrated in Figure 6) in which its third port 36c is connected to its second port 36b whilst its first port 36a is closed. The passage of fluid from the supply line 16 to the control input 20c of the emergency apply valve 20 via the park valve 22 is therefore not affected by the emergency braking override valve36 when the emergency braking override valve 36 is in its first portion. The emergency braking override valve 36 is electrically operable, in this example, by means of a solenoid 36d. Mechanical biasing means (in this example a spring) is provided to urge the emergency braking override valve 36 into the first position. Movement of the emergency braking override valve 36 from the first position to the second position is achieved by the supply of an electrical current to the solenoid 36d.

The shunt valve 14 is movable between a first position (illustrated in Figure 1) in which the first input 14a is connected to the output 14b whilst the second input 14c is closed, and a second position in which the first input 14a is closed and the second input 14c is connected to the output 14b. In this example, the shunt valve 14 is adapted to be moved manually between the first and second positions.

The park valve 22 is movable between a first position (illustrated in Figure 1) in which the input 22a is connected to the output 22b and a second position in which the input 22a is closed and the output 22b vents to a low pressure region (typically to atmosphere). In this example, the park valve 22 is adapted to be moved manually between the first and second positions.

The braking system 10 is operated as follows.

When the trailer is coupled to a tractor, and there is normal service braking, the braking system is configured as shown in Figure 1. The shunt valve 14 and park valve 22 are set to their first positions, and there is no supply of electrical current to the brake apply valve 32. The supply line 12 is connected to a source of pressurised fluid on the tractor, and pressurised fluid passes to the control input 20c of the emergency apply valve 20 via the park line 18 and the park valve 22. The presence of pressurised fluid at its control input 20a causes the emergency apply valve 20 to move to its first position whereby the first input 20a is connected to the output 20b. As a result, pressurised fluid passes along the emergency apply line 16 via the shunt valve 14, and then to the spring brake chamber 32a of the brake actuator 32b via the emergency apply valve 20 and spring brake line 21. The fluid pressure in the spring brake chamber 32a overcomes the biasing force of the spring and the actuator acts to release the brake.

Pressurised fluid also passes from the tractor to the auxiliary fluid reservoir 28 via the trailer supply line 26 so that the auxiliary fluid reservoir 28 is charged with pressurised fluid.

When a driver of the vehicle generates a fluid pressure braking demand signal, this passes along the braking control line 30 to the EBS valve assembly 25, resulting in the supply of fluid pressure to the service braking chamber 23b of the brake actuator 23, and the gradual application of brake pressure in line with driver demand for braking. A conventional anti-lock function may be provided by means of modulating valves in the EBS valve assembly 25.

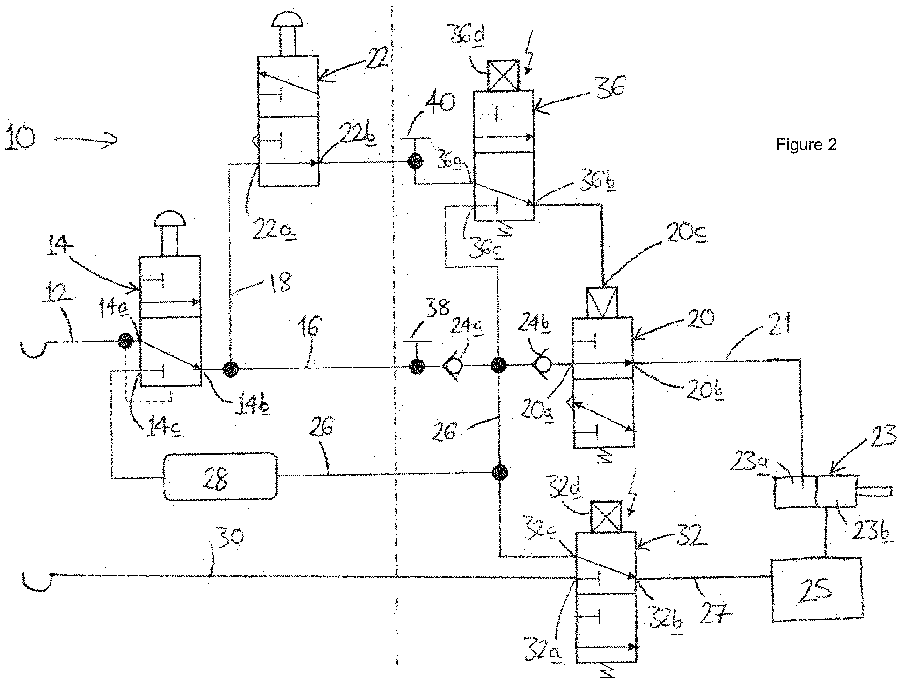

The system 10 may be operated to provide service braking even when there is no fluid pressure braking demand signal by the supply of an electrical current to the solenoid 32d of the brake apply valve 32. This causes the brake apply valve 32 to move to its second position in which the first input 32a is closed and the second input 32c is connected to the output 32b, as illustrated in Figure 2. Pressurised fluid then passes from the supply line 12 through the shunt valve 14 to the emergency apply line 16, through the first one way check valve 24a to the trailer supply line 26, then on to the EBS valve assembly 25 via the brake apply valve 32. The service brake chamber 23b of the actuator 23 may therefore be pressurised autonomously, i.e. without driver initiated braking demand, or with a higher pressure than provided by the fluid pressure braking demand signal. Such autonomous service braking may be required in an automatic stability control system.

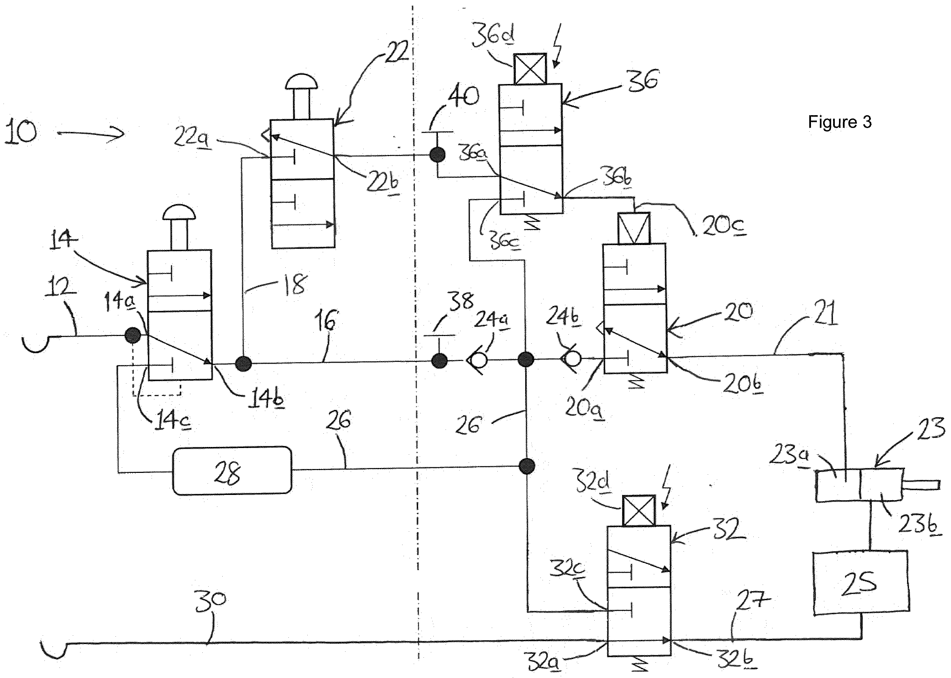

When operating in normal service braking mode, the spring brake can be applied by moving the park valve 22 from its first position to its second position, as illustrated in Figure 3. This causes fluid pressure at the control input 20c of the emergency apply valve 20 to be vented to atmosphere at the park valve 22, and the emergency apply valve 20 to move under the action of its biasing means to its second position in which its output 20b vents to atmosphere, and its input 20a is closed. Pressure is therefore released from the spring brake chamber 23a of the brake actuator 23 at the emergency apply valve 20 and the actuator 23 moves in response to the spring force to apply the brake.

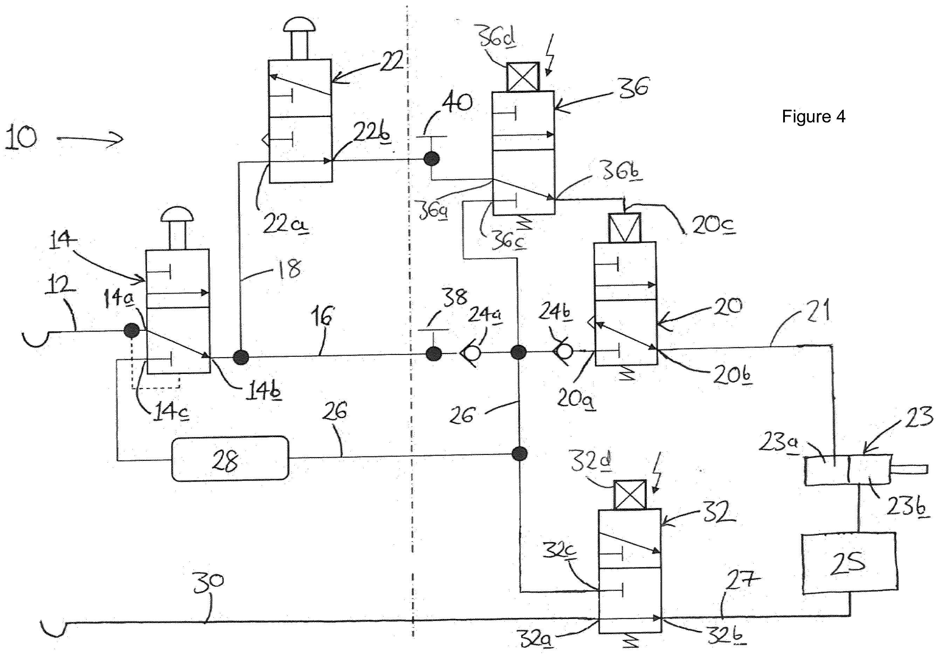

If the supply line 12 is disconnected from its supply of pressurised fluid, and there is no supply of electrical current to the brake apply valve 32, the braking system adopts the configuration shown in Figure 4. The release of pressure from the supply line 12 and the park line 18 causes the emergency apply valve 20 to move under the action of the biasing means to its second position in which the output is exhausted to atmosphere and the input 20a is closed. Fluid pressure is therefore released from the spring brake chamber 23a of the brake actuator 23 and vented to atmosphere at the emergency apply valve 20, and the actuator 23 moves in response to the spring force to apply the brake.

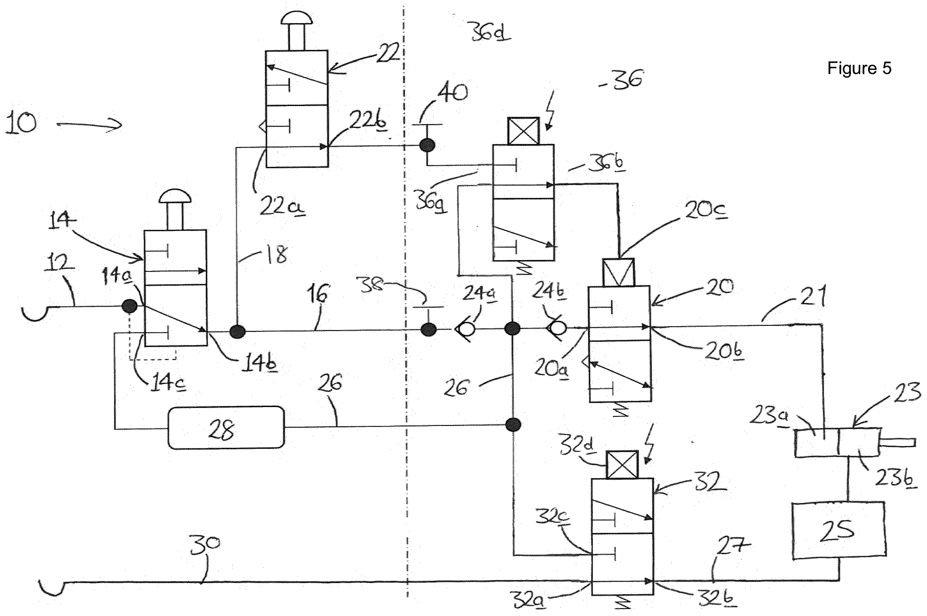

It may, not, however, be desirable to allow this emergency application of the vehicle spring brakes to take place, and if there is no problem with the electrical power supply to the system 10, the system can be operated to prevent this, specifically by the supply of electrical power to the solenoid 36d of the emergency braking override valve 36. This causes the emergency braking override valve 36 to move to its second position wherein the control input 20c of the emergency apply valve 20 is connected to the portion of the emergency apply line 16 between the two one-way check valves 24a, 24b, rather than to the portion of the supply line 16 upstream of the two one-way check valves 24a, 24b. Pressurised fluid thus flows from the reservoir 28 to the control input 20c of the emergency apply valve 20, maintained it in or returning it to its first position. Pressurised fluid can then also flow from the reservoir 28 to the spring brake chamber 23a via the emergency apply valve 20, to release the spring brake. This is illustrated in Figure 5.

The control unit 50 is operable to connect the auxiliary fluid reservoir 28 to the spring brake actuator when pressure in the supply line 12 falls below a supply threshold. In other words, if a fall in the pressure of the supply 12 is detected the control unit 50 is operable to prevent the spring brake actuator from moving to the spring brake apply position (or if the spring brake actuator has moved momentarily, it is causes to moves back to the spring brake release position) (step 60 in figure 6).

In combination with this prevention, the control unit 50 is also operable to initiate automatic braking (an autonomous braking intervention) using the service brake actuator. The autonomous braking intervention causes the service brake actuator to be in its brake apply position until the vehicle speed reaches a low speed threshold (step 62 in figure 6). The low speed threshold is more than 0 km/h (i.e. the threshold is non-zero). A preferred speed range is discussed in more detail below.

Service brake actuator usage controlled by the control unit 50 is initiated by a signal issued to the brake apply valve 32. As described in relation to figure 2, this causes the brake apply valve 32 to move to its second position where the auxiliary fluid reservoir 28 is connected to the service brake actuator (in other words, the first input 32a is closed and the second input 32c is connected to the output 32b). The control unit 50 is then operable to control the EBS valve assembly 25 using the pressurised fluid from the auxiliary fluid reservoir 25 to control the application of the service brake actuator.

The control unit 50 is operable to implement an autonomous braking intervention by applying the service brake actuator until the vehicle is travelling below a predetermined speed. In other words, the control unit 50 is operable to take control of the entire braking system 10 automatically and slow the vehicle (using the service brake actuator) to reach a low speed threshold. However, the vehicle is not brought to a stop - the control unit 50 allows the vehicle to continue to move albeit at a low speed (step 64 in figure 6).

For example, the vehicle is travelling at 50 km/h when the pressure in the supply line 12 falls below the acceptable threshold, the control unit 50 acts to maintain the spring brake actuator in the spring brake release position and implements the service brake actuator until the speed of the vehicle is below 10 km/h. As will be appreciated, the service brake actuator is operated with fluid supplied from the auxiliary fluid reservoir 28.

Thus, in some embodiments, the control unit 50 is operable to implement the autonomous braking intervention immediately when the pressure in the supply line 12 falls / the supply threshold is reached. In other words, the control unit 50 is operable to implement the autonomous braking intervention at substantially the same time as the control unit 50 causes the EBOV 36 to move to its second position.

Alternatively, the control unit 50 may implement the intervention when one or more other criteria are met (step 62a in figure 6).

In another example response, the control unit 50 may, instead, allow the vehicle to continue to move without taking full (autonomous) control (i.e. without implementing the autonomous braking intervention) of the braking system 10. In other words, the control unit 50 may operate the EBOV 36 to prevent the spring brake actuator moving to the spring brake apply position but may not apply the service brake actuator immediately.

In this case, even though the control line 30 may still be operational, the demanded braking pressure is supplied by the auxiliary fluid reservoir 28 instead of the supply line 12 (to the EBS valve assembly 25 and to the service brake actuator). Thus, the auxiliary fluid reservoir 28 depletes over time with the driver continuing to drive and brake the vehicle as required. The control unit 50 monitors the available pressure remaining in the auxiliary fluid reservoir 28. If the pressure in the auxiliary fluid reservoir 28 falls below a predetermined level / threshold (a "low pressure threshold"), the control unit 50 implements the autonomous braking intervention. Thus, the control unit 50 operates the service brake actuator and slows the vehicle to a predetermined low speed threshold.

In some embodiments, the low pressure threshold (i.e. the pressure remaining in the auxiliary fluid reservoir 28 when the control unit 50 implements the autonomous braking intervention) may be about 450kPa.

The speed of the vehicle may be available to the control unit 50 via wheel speed sensors on the trailer or other diagnostics systems that feed information to the control unit 50.

In some embodiments, the autonomous braking intervention includes releasing the service brake actuator when the vehicle speed is reduced to the predetermined low speed. This allows the driver to find a safe location to stop and/or pull off a road / highway (step 72 in figure 6).

In some embodiments, the control unit 50 continues to the monitor the speed of the vehicle after the predetermined low speed is reached (and the service brakes are moved to the service brake release position)). If the vehicle speed increases beyond a threshold (an "acceleration threshold"), the control unit 50 re-implements the autonomous braking intervention (and slows the vehicle to below the predetermined low speed again). In other words, the control unit 50 is operable to implement a second autonomous braking intervention if the vehicle speed exceeds an acceleration threshold (steps 66 and 68 in figure 6). This prevents the driver from attempting to accelerate the vehicle away and, thus, preventing a dangerous situation in which the auxiliary fluid reservoir 28 empties and the wheels lock (under the spring brake actuator) while the vehicle is travelling at high speed.

Once the vehicle reaches the low speed threshold, the autonomous braking invention is ended (step 70 in figure 6).

As can be appreciated, the low speed threshold (the speed which the autonomous braking intervention continues to slow the vehicle to below) will be substantially the same as or below the acceleration threshold (the speed at which a subsequent autonomous braking intervention is initiated). For example, the low speed threshold is between 5 and 15km/h and preferably around 10km/h. The acceleration threshold may be between 10 and 20km/h and preferably around 15km/h. The difference between the low speed threshold and the acceleration threshold may be around 5km/h.

In some embodiments, the control unit 50 stores information (optional step 82 in figure 6) relating to how many autonomous braking interventions have been completed (i.e. how many times the control unit 50 has implemented the autonomous braking intervention and slowed the vehicle to below the low speed threshold). There may be a maximum number of autonomous braking interventions permitted before the control unit 50 does not permit any further control by the driver (i.e. the control unit 50 takes full control and brings the vehicle to a stop or other intervention to prevent ongoing movement of the vehicle). The maximum number of interventions may be around five.

In some embodiments, the control unit 50 alters the thresholds each time a new autonomous braking intervention is initiated (optional step 80 in figure 6). In other words, the control unit 50 is operable to change the low speed threshold and/or the acceleration threshold on or after implementation of the second autonomous braking interventions and/or subsequent autonomous braking interventions.

In some embodiments, the change to the low speed threshold and/or the acceleration threshold is to lower that respective threshold by a set amount, (e.g. by about 5km/h).

For example, the initial low speed threshold is 15km/h and the acceleration threshold is 20 km/h. The driver accelerates the vehicle to above 20 km/h and, so the control unit 50 initiates a second autonomous braking intervention (and the second intervention has different thresholds than the first intervention). The low speed threshold is changed (e.g. to 10 km/h), and the acceleration threshold is changed (e.g. to 15 km/h). Thus, at the control unit 50 will operate to release the service brake actuator when the vehicle is travelling below 10km/h.

If the driver tries to accelerate again, the acceleration threshold is now lower (15km/h), so the control unit 50 will implement a third (further) autonomous braking intervention at 15km/h rather than 20km/h. Furthermore, the thresholds are also changed again. The low speed threshold is changed (e.g. to 5 km/h), and the acceleration threshold is changed (e.g. to 10 km/h). Thus, at the control unit 50 will operate to release the service brake actuator when the vehicle is travelling below 5km/h.

This process of modifying / changing the thresholds prevents or at least dissuades the driver from "fighting" with the control unit 50 and trying to accelerate the vehicle to higher speeds when it is not safe to do so.

In some embodiments, the control unit 50 is operable to reduce the speed of the vehicle to a stop, using the service brake actuator, if the maximum number of autonomous braking interventions is reached.

As with conventional service braking, the EBS valve assembly 25 is still operable to use conventional ABS control algorithms to modify the braking in accordance with standard anti-lock control procedures if wheel slip is detected (even if the control unit 50 has implemented an autonomous braking intervention).

In some embodiments, the braking system 10 may include a pressure sensor 38 in the emergency apply line 16 between the first one way valve 24a and the connection to the park line 18. In some embodiments, the pressure sensor 38 is connected to the control unit 50 which controls operation of the electrically operated valves in the braking system (including the brake apply valve 32 and the electrically operated valves in the EBS valve assembly 25). The control unit 50 is operable always to energise the emergency override valve 36 to override the emergency application of the spring brake whenever a sudden drop in the pressure in the emergency apply line 16 is detected, or whenever the pressure in the emergency apply line 16 falls below a predetermined level (the supply threshold).

In some embodiments, release of the spring brake occurring as a result of actuation of the park valve 22 as described in relation to figure 3 above may also be overridden by actuation of the emergency braking override valve 36. In order to do this, a further pressure sensor 40 may be provided in the park line 18 between the control input 20c of the emergency apply valve 20 and the output 22b of the park valve 22. The further pressure sensor 40 may also be connected to the control unit 50, such that the control unit 50 can respond to a sudden reduction in pressure signal from the further pressure sensor 40 in the same way as described above in relation to the first pressure sensor 38.

It should be appreciated that, whilst in the embodiment of the invention described above two pressure transducers 38, 40 are provided; this need not be the case. The further pressure transducer 40 can be provided instead of the first pressure transducer 38, as the further pressure transducer 40 also detects the loss of pressure in the supply line 16. The provision of both pressure transducers 38, 40 allows the system to discriminate between loss of pressure to the control input 20c of the emergency apply valve 20 as a result of loss of supply pressure from the loss of pressure caused by operation of the park valve 22.

For completeness, it should be appreciated that the shunt valve 14 may be operated to release the parking brake without the need for electrical power, for example if the trailer is disconnected from a tractor but needs to be moved around a depot or the like. This can be done by moving the park valve 22 to its first position, and moving the shunt valve 14 to its second position. Pressurised fluid flows from the auxiliary fluid reservoir 28 to the control input 20c of the emergency apply valve 20 via the park line 18 and the park valve 22. The pressure at the control input 20c moves the emergency apply valve 20 to its first position and the auxiliary fluid reservoir 28 is thus connected to the spring brake chamber 23a via the emergency apply line 16, the emergency apply valve 20 and the spring brake line 21. The resulting flow of pressurised fluid to the spring brake chamber 23a results in the release of the spring brake. The spring brake can be reapplied by returning the shunt valve 14 to its first position.

To avoid damage to the brake or brake actuator due to the simultaneous application of the spring brake and the service brake (compounding of the brakes), the EBS valve assembly 25 may also include a further double check valve in a line connecting the second portion 21b of the spring brake line 21 to the delivery port of the modulator or one of the modulators in the EBS valve assembly 25. This double check valve is configured such that no flow of fluid along this line is permitted unless, when the spring brake chamber 23a is exhausted (and so the spring brake applied); there is demand for service braking. Then, there is flow of pressurised fluid to the spring brake chamber 23a (to release the spring brake) in addition to flow to the service braking chamber 23b.

The pressurised fluid used in the invention is preferably compressed air, but any other fluid may be used instead, and the invention could equally be employed in a hydraulic braking system.

When used in this specification and claims, the term "line" covers any type of conduit for pressurised fluid including a passage or bore through a housing, a hose, pipe or tube. The important aspect is functionality and connecting parts of the braking system together with a conduit that allows fluid (e.g. air) to flow.

When used in this specification and claims, the terms "comprises" and "comprising" and variations thereof mean that the specified features, steps or integers are included. The terms are not to be interpreted to exclude the presence of other features, steps or components.

## Claims

1. A vehicle braking system (10) for use in a vehicle including a tractor and a trailer including:
a control unit (50), a spring brake actuator and a service brake actuator, a supply line (12) for connecting to a source of pressurised fluid, and an auxiliary fluid reservoir (28),
the spring brake actuator being held in a spring brake release position by the provision of pressurised fluid and in a spring brake apply position when pressurised fluid is vented to atmosphere and the service brake actuator being operable to move to a brake apply position by the provision of pressurised fluid, and
**characterised in that** the control unit (50) is operable to connect the auxiliary fluid reservoir (28) to the spring brake actuator when pressure in the supply line (12) falls below a supply threshold and to initiate an autonomous braking intervention in which the service brake actuator is in its brake apply position until the vehicle speed reaches a low speed threshold.

2. A vehicle braking system (10) according to claim 1 further including:
a control line (30) for connecting to a source of pressurised fluid on demand, an emergency brake apply valve (20), connected to the supply line (12) and the spring brake actuator, and operable to automatically connect the spring brake actuator to a low pressure region when the pressure to the emergency brake apply valve (20) falls below a spring brake threshold,
an electrically operable emergency braking override valve (36), which is connected to the supply line (12), the auxiliary fluid reservoir (28) and the emergency brake apply valve (20), and has a first position in which the supply line (12) is connected to the emergency brake apply valve (20) and a second position in which the auxiliary fluid reservoir (28) is connected to the emergency brake apply valve (20),
an electrically operable brake apply valve (32), which is connected to the control line (30), the auxiliary fluid reservoir (28) and the service brake actuator, and has a first position in which the control line (30) is connected to the service brake actuator and a second position in which the auxiliary fluid reservoir (28) is connected to the service brake actuator, and
wherein when the pressure in the supply line (12) falls below the supply threshold, the control unit (50) causes the emergency braking override valve (36) to move to its second position thereby ensuring that the spring brake actuator is in its spring brake release position.

3. A vehicle braking system (10) according to claim 1 or 2 wherein the low speed threshold is above zero km/h,
optionally the low speed threshold is between around 5km/h and 15km/h,
and optionally around 10km/h.

4. A vehicle braking system (10) according to any one of claims 1 to 3 wherein the control unit (50) is operable to implement a second autonomous braking intervention if the vehicle speed exceeds an acceleration threshold,
optionally wherein the acceleration threshold is between around 10km/h to 20km/h,
and optionally around 15 km/h.

5. A vehicle braking system (10) according to claim 4 wherein the control unit (50) is operable to change the low speed threshold and/or the acceleration threshold on or
after implementation of the second autonomous braking interventions and/or subsequent autonomous braking interventions.

6. A vehicle braking system (10) according to claim 5 wherein the change to the low speed threshold and/or the acceleration threshold is to lower that respective threshold by a set amount, and preferably by about 5km/h.

7. A vehicle braking system (10) according to any of claims 4 to 6 wherein the control unit (50) is operable to implement a maximum number of autonomous braking interventions before one or more further operations are implemented,
optionally wherein the maximum number of interventions permitted is five.

8. A vehicle braking system (10) according to claim 5 wherein the control unit (50) is operable to reduce the speed of the vehicle to a stop, using the service brake actuator, if the maximum number of autonomous braking interventions is reached.

9. A vehicle braking system (10) according to any of the preceding claims wherein the control unit (50) is operable to implement the autonomous braking intervention at substantially the same time as the control unit (50) causes the emergency override valve (36) to move to its second position and / or as the control unit (50) connects the auxiliary fluid reservoir (28) to the spring brake actuator.

10. A vehicle braking system (10) according to any of claims 1 to 9 wherein the control unit (50) implements the autonomous braking intervention when a low pressure threshold in the auxiliary fluid reservoir (28) is met,
optionally wherein the low pressure threshold is around 450kPa.

11. A method of controlling a vehicle braking system (10) of a vehicle including a tractor and a trailer, where the braking system (10) includes a control unit (50), a spring brake actuator and a service brake actuator, a supply line (12) and an auxiliary fluid reservoir (28); wherein the spring brake actuator is held in a spring brake release position by the supply of fluid and in a spring brake apply position when the supply of fluid is vented to atmosphere or lost and the service brake actuator being operable to move to a brake apply position by the supply of fluid, **characterised in that** the method includes:
identifying that a pressure in the supply line (12) has fallen below a supply threshold,
connecting the auxiliary fluid reservoir (28) to the spring brake actuator, and
initiating an autonomous braking intervention using the control unit (50) and applying service brake actuator until the vehicle reaches a low speed threshold.

12. A method of controlling a vehicle braking system (10) according to claim 11 including initiating the autonomous braking intervention at substantially the same time as connecting the auxiliary fluid reservoir (28) to the spring brake actuator.

13. A method of controlling a vehicle braking system (10) according to claim 11 or 12 including implementing a second autonomous braking intervention if the vehicle speed exceeds an acceleration threshold.

14. A method of controlling a vehicle braking system (10) according to claim 13 including implementing a maximum number of autonomous braking interventions before implementing one or more further operations,
optionally wherein the maximum number of interventions permitted is five,
optionally including stopping the vehicle after the maximum number of autonomous braking interventions has been met.

## Patentansprüche

1. Fahrzeugbremssystem (10) zur Nutzung in einem Fahrzeug, das eine Zugmaschine und einen Anhänger enthält, enthaltend:
eine Steuereinheit (50), einen Federspeicherbremsenaktor und einen Betriebsbremsenaktor, eine Zufuhrleitung (12) zum Verbinden mit einer Druckfluidquelle und einen Zusatzfluidbehälter (28),
wobei der Federspeicherbremsenaktor durch die Bereitstellung von Druckfluid in einer Federspeicherbremsenfreigabeposition und, wenn Druckfluid in die Atmosphäre abgelassen wird, in einer Federspeicherbremsenbetätigungsposition gehalten wird und der Betriebsbremsenaktor betätigbar ist, um sich durch die Bereitstellung von Druckfluid in eine Bremsenbetätigungsposition zu bewegen, und
**dadurch gekennzeichnet, dass** die Steuereinheit (50) betätigbar ist, um den Zusatzfluidbehälter (28) mit dem Federspeicherbremsenaktor zu verbinden, wenn der Druck in der Zufuhrleitung (12) einen Zufuhrgrenzwert unterschreitet, und einen autonomen Bremseingriff auszulösen, bei dem der Betriebsbremsenaktor so lange in seiner Bremsenbetätigungsposition ist, bis die Fahrzeuggeschwindigkeit einen unteren Geschwindigkeitsgrenzwert erreicht.

2. Fahrzeugbremssystem (10) nach Anspruch 1, weiter enthaltend:
eine Steuerleitung (30) zum Verbinden mit einer Druckfluidquelle auf Anforderung,
ein mit der Zufuhrleitung (12) und dem Federspeicherbremsenaktor verbundenes Notbremsenbetätigungsventil (20), das betätigbar ist, um den Federspeicherbremsenaktor automatisch mit einem Niederdruckbereich zu verbinden, wenn der Druck auf das Notbremsenbetätigungsventil (20) einen Federspeicherbremsengrenzwert unterschreitet,
ein elektrisch betätigbares Notbremsübersteuerungsventil (36), das mit der Zufuhrleitung (12), dem Zusatzfluidbehälter (28) und dem Notbremsenbetätigungsventil (20) verbunden ist und eine erste Position, in der die Zufuhrleitung (12) mit dem Notbremsenbetätigungsventil (20) verbunden ist, und eine zweite Position, in der der Zusatzfluidbehälter (28) mit dem Notbremsenbetätigungsventil (20) verbunden ist, aufweist,
ein elektrisch betätigbares Bremsenbetätigungsventil (32), das mit der Steuerleitung (30), dem Zusatzfluidbehälter (28) und dem Betriebsbremsenaktor verbunden ist und eine erste Position, in der die Steuerleitung (30) mit dem Betriebsbremsenaktor verbunden ist, und eine zweite Position, in der der Zusatzfluidbehälter (28) mit dem Betriebsbremsenaktor verbunden ist, aufweist, und
wobei, wenn der Druck in der Zufuhrleitung (12) den Zufuhrgrenzwert unterschreitet, die Steuereinheit (50) bewirkt, dass sich das Notbremsübersteuerungsventil (36) in seine zweite Position bewegt, und dadurch sicherstellt, dass der Federspeicherbremsenaktor in seiner Federspeicherbremsenfreigabeposition ist.

3. Fahrzeugbremssystem (10) nach Anspruch 1 oder 2, wobei der untere Geschwindigkeitsgrenzwert größer als null km/h ist,
der untere Geschwindigkeitsgrenzwert optional zwischen etwa 5 km/h und 15 km/h liegt
und optional etwa 10 km/h beträgt.

4. Fahrzeugbremssystem (10) nach einem der Ansprüche 1 bis 3, wobei die Steuereinheit (50) betätigbar ist, um einen zweiten autonomen Bremseingriff zu implementieren, wenn die Fahrzeuggeschwindigkeit einen Beschleunigungsgrenzwert überschreitet,
wobei der Beschleunigungsgrenzwert optional zwischen etwa 10 km/h und 20 km/h liegt und
optional etwa 15 km/h beträgt.

5. Fahrzeugbremssystem (10) nach Anspruch 4, wobei die Steuereinheit (50) betätigbar ist, um den unteren Geschwindigkeitsgrenzwert und/oder den Beschleunigungsgrenzwert bei oder nach einer Implementierung der zweiten autonomen Bremseingriffe und/oder von darauffolgenden autonomen Bremseingriffen zu ändern.

6. Fahrzeugbremssystem (10) nach Anspruch 5, wobei die Änderung des unteren Geschwindigkeitsgrenzwerts und/oder des Beschleunigungsgrenzwerts darin besteht, dass dieser jeweilige Grenzwert um einen festgesetzten Betrag und vorzugsweise um etwa 5 km/h herabgesetzt wird.

7. Fahrzeugbremssystem (10) nach einem der Ansprüche 4 bis 6, wobei die Steuereinheit (50) betätigbar ist, um eine maximale Anzahl autonomer Bremseingriffe zu implementieren, bevor ein oder mehrere weitere Vorgänge implementiert werden,
wobei die maximale Anzahl zulässiger Eingriffe optional fünf beträgt.

8. Fahrzeugbremssystem (10) nach Anspruch 5, wobei die Steuereinheit (50) betätigbar ist, um unter Nutzung des Betriebsbremsenaktors die Geschwindigkeit des Fahrzeugs bis zum Anhalten zu verringern, wenn die maximale Anzahl autonomer Bremseingriffe erreicht wird.

9. Fahrzeugbremssystem (10) nach einem der vorhergehenden Ansprüche, wobei die Steuereinheit (50) betätigbar ist, um den autonomen Bremseingriff im Wesentlichen zu derselben Zeit zu implementieren, zu der auch die Steuereinheit (50) bewirkt, dass sich das Notbremsübersteuerungsventil (36) in seine zweite Position bewegt, und/oder die Steuereinheit (50) den Zusatzfluidbehälter (28) mit dem Federspeicherbremsenaktor verbindet.

10. Fahrzeugbremssystem (10) nach einem der Ansprüche 1 bis 9, wobei die Steuereinheit (50) den autonomen Bremseingriff implementiert, wenn ein unterer Druckgrenzwert in dem Zusatzfluidbehälter (28) erreicht wird,
wobei der untere Druckgrenzwert optional etwa 450 kPa beträgt.

11. Verfahren zum Steuern eines Fahrzeugbremssystems (10) eines Fahrzeugs, das eine Zugmaschine und einen Anhänger enthält, wobei das Bremssystem (10) eine Steuereinheit (50), einen Federspeicherbremsenaktor und einen Betriebsbremsenaktor, eine Zufuhrleitung (12) und einen Zusatzfluidbehälter (28) enthält; wobei der Federspeicherbremsenaktor durch die Zufuhr von Fluid in einer Federspeicherbremsenfreigabeposition und, wenn das zugeführte Fluid in die Atmosphäre abgelassen wird oder verloren geht, in einer Federspeicherbremsenbetätigungsposition gehalten wird und der Betriebsbremsenaktor betätigbar ist, um sich durch die Zufuhr von Fluid in eine Bremsenbetätigungsposition zu bewegen, **dadurch gekennzeichnet, dass** das Verfahren Folgendes enthält:
Identifizieren, dass der Druck in der Zufuhrleitung (12) einen Zufuhrgrenzwert unterschritten hat,
Verbinden des Zusatzfluidbehälters (28) mit dem Federspeicherbremsenaktor und
Auslösen eines autonomen Bremseingriffs unter Nutzung der Steuereinheit (50) und Betätigen eines Betriebsbremsenaktors, solange bis das Fahrzeug einen unteren Geschwindigkeitsgrenzwert erreicht.

12. Verfahren zum Steuern eines Fahrzeugbremssystems (10) nach Anspruch 11, das enthält, dass der autonome Bremseingriff im Wesentlichen zu derselben Zeit ausgelöst wird, zu der auch der Zusatzfluidbehälter (28) mit dem Federspeicherbremsenaktor verbunden wird.

13. Verfahren zum Steuern eines Fahrzeugbremssystems (10) nach Anspruch 11 oder 12, das enthält, dass ein zweiter autonomer Bremseingriff implementiert wird, wenn die Fahrzeuggeschwindigkeit einen Beschleunigungsgrenzwert überschreitet.

14. Verfahren zum Steuern eines Fahrzeugbremssystems (10) nach Anspruch 13, das enthält, dass eine maximale Anzahl autonomer Bremseingriffe implementiert wird, bevor ein oder mehrere weitere Vorgänge implementiert werden,
wobei die maximale Anzahl zulässiger Eingriffe optional fünf beträgt,
und optional enthält, dass das Fahrzeug angehalten wird, nachdem die maximale Anzahl autonomer Bremseingriffe erreicht worden ist.

## Revendications

1. Système de frein de véhicule (10) destiné à être utilisé dans un véhicule comprenant un tracteur et une remorque et comportant :
une unité de contrôle (50), un actionneur de frein à ressort et un actionneur de frein de service, une conduite d'alimentation (12) à relier à une source de fluide pressurisé, et un réservoir de liquide auxiliaire (28),
l'actionneur du frein à ressort étant maintenu dans une position de desserrage du frein à ressort sous l'effet d'un fluide pressurisé et dans une position de serrage du frein à ressort lorsque le fluide pressurisé est rejeté dans l'atmosphère, et l'actionneur du frein de service pouvant être mis en oeuvre pour être déplacé sur une position de serrage de frein sous l'effet d'un fluide pressurisé, et
**caractérisé en ce que** l'unité de contrôle (50) peut être mise en oeuvre pour relier le réservoir de liquide auxiliaire(28) à l'actionneur du frein à ressort lorsque la pression exercée dans la conduite d'alimentation (12) chute en deçà d'un certain seuil d'alimentation et pour amorcer une intervention de freinage autonome, au cours de laquelle l'actionneur du frein de service se trouve dans sa position de serrage de frein jusqu'à ce que la vitesse du véhicule atteigne un seuil où il roule à basse vitesse.

2. Système de frein de véhicule (10) selon la revendication 1, comprenant en outre :
une conduite de contrôle (30) à relier à une source de fluide pressurisé à la demande, une soupape de serrage de frein d'urgence (20), reliée à la conduite d'alimentation (12) et l'actionneur du frein à ressort, et mise en oeuvre pour automatiquement relier l'actionneur du frein à ressort à une région de basse pression lorsque la pression exercée sur la soupape de serrage du frein d'urgence (20) chute en deçà d'un certain seuil du frein à ressort,
une soupape de neutralisation de freinage d'urgence électriquement mise en oeuvre(36), qui est reliée à la conduite d'alimentation (12), au réservoir de liquide auxiliaire (28) et à la soupape de serrage du frein d'urgence (20), et qui comporte une première position où la conduite d'alimentation (12) est reliée à la soupape de serrage du frein d'urgence (20) et une seconde position où le réservoir de liquide auxiliaire (28) est relié à la soupape de serrage du frein d'urgence (20),
une soupape de serrage de frein électriquement mise en oeuvre (32), qui est reliée à la conduite de contrôle (30), au réservoir de liquide auxiliaire (28) et à l'actionneur du frein de service; et qui comporte une première position où la conduite de contrôle (30) est reliée à l'actionneur du frein de service et une seconde positon où le réservoir de liquide auxiliaire (28) est relié à l'actionneur du frein de service, et
dans lequel la pression exercée dans la conduite d'alimentation (12) chute en deçà du seuil d'alimentation, l'unité de contrôle (50) induit la soupape de neutralisation du serrage d'urgence (36) à se déplacer sur sa seconde position garantissant ainsi que l'actionneur du frein à ressort se trouve dans sa position de desserrage de frein à ressort.

3. Système de frein de véhicule (10) selon soit la revendication 1, soit la revendication 2, dans lequel le seuil de basse vitesse se situe au-delà du zéro km/h,
facultativement, le seuil de basse vitesse se situe entre environ 5 km/h et 15 km/h,
et, facultativement, à environ 10 km/h.

4. Système de frein de véhicule (10) selon l'une quelconque des revendications 1 à 3, dans lequel l'unité de contrôle (50) est mise en oeuvre pour amorcer une seconde intervention de freinage autonome si la vitesse du véhicule dépasse un certain seuil d'accélération,
facultativement, dans lequel le seuil d'accélération se situe entre environ 10 km/h et 20 km/h,
et, facultativement, à environ 15 km/h.

5. Système de frein de véhicule (10) selon la revendication 4, dans lequel l'unité de contrôle (50) est mise en oeuvre pour modifier le seuil de basse vitesse et/ou le seuil d'accélération au moment ou après l'amorçage de la seconde intervention de freinage autonome et/ou lors d'interventions de freinage autonomes ultérieures.

6. Système de frein de véhicule (10) selon la revendication 5, dans lequel la modification apportée au seuil de basse vitesse et/ou au seuil d'accélération consiste à abaisser ce seuil respectif selon un montant défini et, de préférence, d'environ 5 km/h.

7. Système de frein de véhicule (10) selon l'une quelconque des revendications 4 à 6, dans lequel l'unité de contrôle (50) est mise en oeuvre pour amorcer un nombre maximal d'interventions de freinage autonomes avant de procéder à une autre intervention ou à plusieurs autres interventions,
facultativement, dans lequel le nombre maximal d'interventions permises est de cinq interventions.

8. Système de frein de véhicule (10) selon la revendication 5, dans lequel l'unité de contrôle (50) est mise en oeuvre pour réduire la vitesse du véhicule à une position d'arrêt, en utilisant l'actionneur du frein de service, si le nombre maximal d'interventions de freinage autonomes est atteint.

9. Système de frein de véhicule (10) selon l'une quelconque des revendications précédentes, dans lequel l'unité de contrôle (50) est mise en oeuvre pour amorcer l'intervention de freinage autonome à sensiblement au même moment où l'unité de contrôle (50) induit la soupape de neutralisation d'urgence (36) à se déplacer sur sa seconde position et/ou au même moment où l'unité de contrôle (50) relie le réservoir de liquide auxiliaire (28) à l'actionneur du frein à ressort.

10. Système de frein de véhicule (10) selon l'une quelconque des revendications 1 à 9, dans lequel l'unité de contrôle (50) amorce l'intervention de freinage autonome lorsqu'un certain seuil de basse pression est atteint dans le réservoir de liquide auxiliaire (28),
facultativement, dans lequel le seuil de basse pression se situe à environ 450 kPa.

11. Procédé de contrôle d'un système de frein de véhicule (10) d'un véhicule comprenant un tracteur et une remorque, dans lequel le système de frein (10) comporte une unité de contrôle (50), un actionneur de frein à ressort et un actionneur de frein de service, une conduite d'alimentation (12) et un réservoir de liquide auxiliaire (28) ; dans lequel l'actionneur du frein à ressort est maintenu dans une position de desserrage du frein à ressort sous l'effet de l'alimentation du fluide et dans une position de serrage du frein à ressort lorsque l'alimentation du fluide est rejetée dans l'atmosphère ou perdue, et l'actionneur du frein de service pouvant être mis en oeuvre pour être déplacé sur une position de serrage de frein sous l'effet de l'alimentation du fluide, **caractérisé en ce que** le procédé consiste à :
identifier qu'une pression exercée dans la conduite d'alimentation (12) a chuté en deçà d'un certain seuil d'alimentation,
relier le réservoir de liquide auxiliaire(28) à l'actionneur du frein à ressort, et
amorcer une intervention de freinage autonome, par le biais de l'unité de contrôle (50), et solliciter l'actionneur du frein de service jusqu'à ce que le véhicule atteigne un seuil où il roule à basse vitesse.

12. Procédé de contrôle d'un système de frein de véhicule (10) selon la revendication 11, consistant à amorcer l'intervention de freinage autonome à sensiblement au même moment du raccordement du réservoir de liquide auxiliaire (28) à l'actionneur du frein à ressort.

13. Procédé de contrôle d'un système de frein de véhicule (10) selon soit la revendication 11, soit la revendication 12, consistant à amorcer une seconde intervention de freinage autonome si la vitesse du véhicule dépasse un certain seuil d'accélération.

14. Procédé de contrôle d'un système de frein de véhicule (10) selon la revendication 13, consistant à amorcer un nombre maximal d'interventions de freinage autonomes avant de procéder à une autre ou à plusieurs autres interventions,
facultativement, dans lequel le nombre maximal d'interventions permises est de cinq interventions,
facultativement, consistant à arrêter le véhicule une fois le nombre maximal d'interventions de freinage autonomes atteint.
